# EUROPEAN PATENT APPLICATION

(11) **EP 4 600 560 A1**
(43) Date of publication of application: **13.08.2025**
(21) Application number: 23874468.4
(22) Date of filing: 17.05.2023
(51) Int. Cl.: F23N 5/10, F23D 14/10, F23D 14/12

(54) **HEATED COOKING DEVICE**

(30) Priority: 03.10.2022 JP 2022159845
(71) Applicant: Rinnai Corporation, Nagoya-shi, Aichi 454-0802 (JP)
(72) Inventor: HAYASHI, Shusaku, Nagoya-shi, Aichi 454-0802 (JP); ONO, Takahiro, Nagoya-shi, Aichi 454-0802 (JP); IKUTA, Hiroyuki, Toyota-shi, Aichi 471-8571 (JP); SAKUMA, Daisuke, Toyota-shi, Aichi 471-8571 (JP); KANO, Akira, Toyota-shi, Aichi 471-8571 (JP); TAKAHASHI, Takaaki, Toyota-shi, Aichi 471-8571 (JP); HIRATA, Koichi, Toyota-shi, Aichi 471-8571 (JP)
(74) Representative: Haseltine Lake Kempner LLP
(86) International application number: PCT/JP2023/018376
(87) International publication number: WO 2024/075332

(57) **Abstract**

A heating and cooking apparatus HC that heats and cooks food to be heated and cooked by combusting a fuel gas, which includes: burners 3 each of which has a tubular and elongated burner body 31, and multiple burner ports 32 that are opened at intervals in each burner body in a longitudinal direction; infrared radiation members 4 each of which is disposed opposite a corresponding burner body, each infrared radiation member being elongated in the longitudinal direction of each burner body and radiating infrared by being heated; and thermocouples 6 each of which detects a flame that is generated when the fuel gas is supplied to each burner, ejects from each burner port, and is combusted. Even when the heating and cooking apparatus is configured such that hydrogen as the fuel gas, ejecting from each burner port, is diffused and combusted, a yield strength of each thermocouple cannot be reduced, and hydrogen flame can be detected reliably.

Each thermocouple is disposed such that a temperature-measuring contact part 61 of each thermocouple is located on a plane where a straight line Sl, connecting a peripheral edge of each burner port and one end in a width direction of the corresponding infrared radiation member in the shortest way, is projected in the longitudinal direction of each burner body.

## Description

### Technical Field

The invention relates to a heating and cooking apparatus that heats and cooks food to be heated and cooked by combusting a fuel gas.

### Background Art

As a heating and cooking apparatus of this type, there has been known the heating and cooking apparatus, including: burners each of which has a tubular and elongated burner body, and multiple burner ports that are opened at intervals in each burner body in a longitudinal direction; and infrared radiation members each of which is disposed opposite a corresponding burner body, each infrared radiation member being elongated in the longitudinal direction of each burner body and radiating infrared by being heated (see Patent document No. 1, for example). In the heating and cooking apparatus, an air-fuel mixture, of which a fuel is a natural gas or an LP gas and an air excessive ratio is approximately from 1.0 to 1.2, is supplied to each burner, and the air-fuel mixture ejecting from each burner port is combusted. In addition, multiple auxiliary burner ports are opened outward from the burner ports located at one end in the longitudinal direction of each burner body are opened, and thermocouples are disposed such that a temperature-measuring contact part of each thermocouple protrudes into a flame generated by combustion of the air-fuel mixture from the auxiliary burner ports, thereby detecting the flame.

On the other hand, hydrogen that does not emit carbon dioxide has recently attracted an attention as an alternative fuel to hydrocarbon gases in the effort to prevent global warming. In order to effectively heat the infrared radiation member with a hydrogen flame generated when hydrogen is combusted, it has been considered that each burner is configured to diffuse and combust hydrogen ejecting from each burner port. In such the case, as in the conventional heating and cooking apparatus in which each thermocouple is disposed such that the temperature-measuring contact part protrudes into the hydrogen flame generated by the combustion of hydrogen, there is a problem that yield strength of each thermocouple reduces due to an excessively high temperature of the temperature-measuring contact part. On the contrary, since the hydrogen flame during the diffusion and combustion is prone to flicking due to an influence of a secondary air, if the temperature-measuring contact part is too far from the hydrogen flame, the hydrogen flame cannot be often detected.

### Reference

Patent Document No. 1: JP1994-229519 A

### Summary of Invention

### Technical Problems

In light of the aforementioned problem, the invention provides a heating and cooking apparatus in which the yield strength of each thermocouple cannot reduce and can reliably detect the hydrogen flame, even when each burner is configured to diffuse and combust hydrogen ejecting from each burner port.

### Solution to Problems

In order to solve the aforementioned problem, the invention presupposes a heating and cooking apparatus that heats and cooks food to be heated and cooked by combusting a fuel gas, including: burners each of which has a tubular and elongated burner body, and multiple burner ports that are opened at intervals in each burner body in a longitudinal direction; infrared radiation members each of which is disposed opposite a corresponding burner body, each infrared radiation member being elongated in the longitudinal direction of each burner body and radiating infrared by being heated; and thermocouples each of which detects a flame that is generated when the fuel gas is supplied to each burner, ejects from each burner port, and is combusted. In the heating and cooking apparatus, each burner is configured to diffuse and combust hydrogen as the fuel gas, which ejects from each burner port, and each thermocouple is disposed such that a temperature-measuring contact part thereof is located on a plane where a straight line, connecting a peripheral edge of each burner port and one end in a width direction of the corresponding infrared radiation member in the shortest way, is projected in the longitudinal direction of each burner body.

According to the invention, the problem that yield strength of each thermocouple reduces due to an excessively high temperature of the temperature-measuring contact part does not occur, and even when the hydrogen flame flickers, each thermocouple can always detect the hydrogen flame. It should be noted that the aforementioned phrase," a temperature-measuring contact part thereof is located on a plane on which a straight line, connecting peripheral edges of the burner ports and one end in a width direction of a corresponding infrared radiation member in the shortest way, is projected in the longitudinal direction of each burner body", includes not only an arrangement where the temperature-measuring contact part is located so as to substantially come into contact with the projected plane, but also an arrangement where the temperature-measuring contact part is located so as to intersect the projected plane.

Meanwhile, the flame generated at the burner port located closest to one end in the longitudinal direction of each burner body easily flickers specifically. In the invention, it is preferable that, when viewed from a side of each infrared radiation member, the temperature-measuring contact part of each thermocouple is located at a portion where a distance from one end in the longitudinal direction of each burner body is equal to or longer than a distance to a burner port adjacent to a burner port located closest to the one end in the longitudinal direction of each burner body. According to this, the hydrogen flame can be detected more reliably by positioning the temperature-measuring contact part at the portion where the hydrogen flame is more stable.

### Brief Description of the Drawings

[FIG. 1] FIG. 1 is a perspective view of a heating and cooking apparatus as an embodiment of the invention.
[FIG. 2] FIG. 2 is a partially omitted cross-section along a II-II line depicted in FIG. 1.
[FIG. 3] FIG. 3 is a cross-section along a III-III line depicted in FIG. 1.
[FIG. 4] FIG. 4 is a partially enlarged view of FIG. 3.

### Description of Embodiments

Referring to figures, an embodiment of a heating and cooking apparatus of the invention, which heats and cooks food to be heated and cooked, such as meat or fish, by combusting hydrogen as a fuel gas, will be described below. It should be noted that "hydrogen" as referred in the invention is not limited to pure hydrogen but also includes mixtures that contain a small amount of rotten-smell agents to add putrid odors.

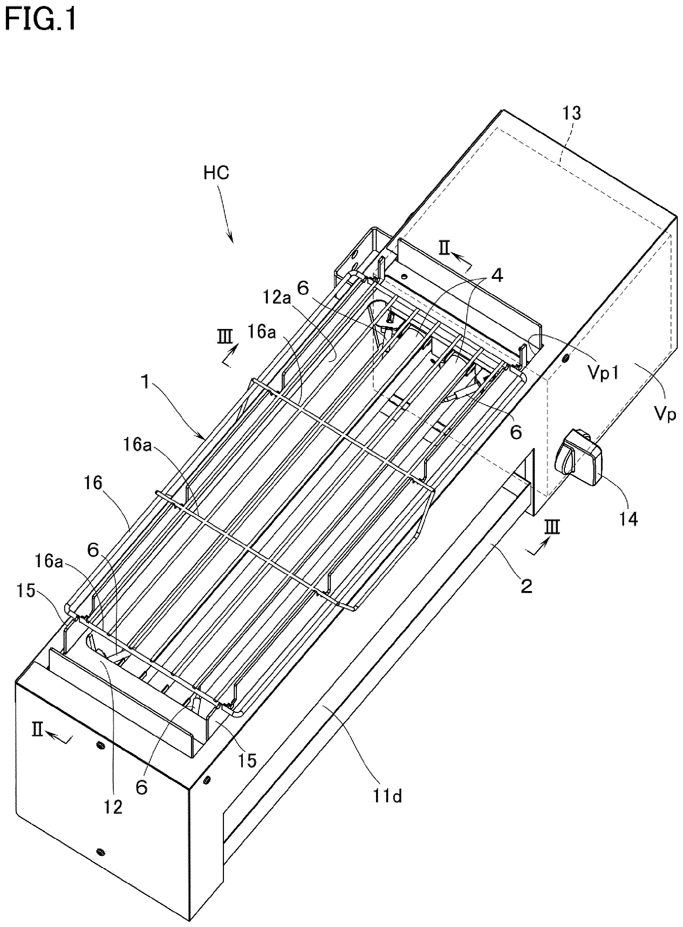

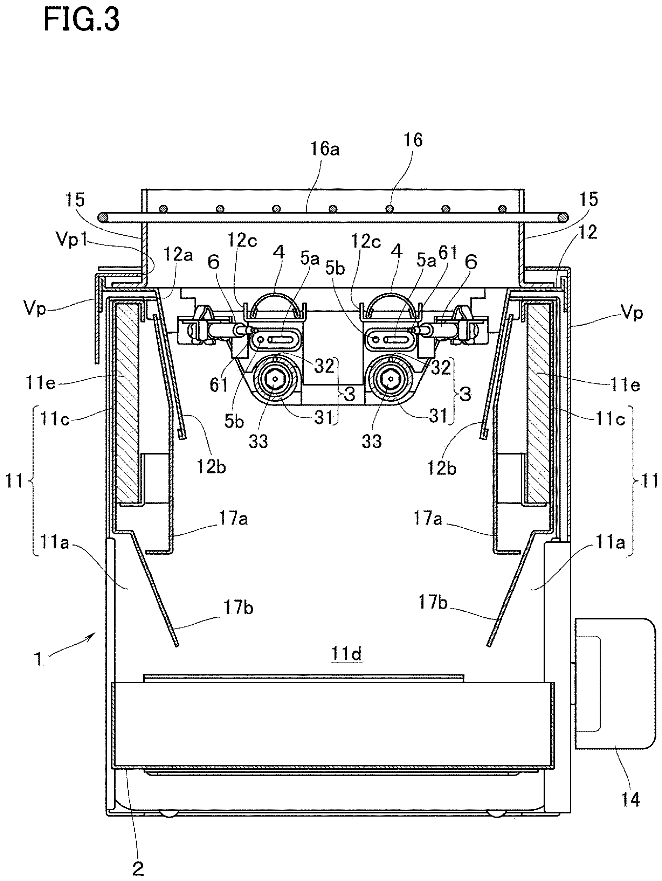

Referring to FIGS. 1-3, the heating and cooking apparatus HC includes an apparatus body 1 that is elongated in one horizontal direction and is rectangular parallelepiped. In the apparatus body 1, a supporting frame 11 having a pair of inner-side plates 11a, 11b disposed at an interval in a longitudinal direction and an inner-beam plate 11c bridging both inner-side plates 11a, 11b on both sides in a width direction of the inner-side plates 11a, 11b, and a top plate 12 covering an upper-surface opening of the supporting frame 11 are provided. In addition, a storage space 11d piercing in the width direction is formed under the inner-beam plate 11c. A drop-receiving tray 2 is detachably storage in the storage space 11d, and a heatinsulating material 11e is mounted on an inner surface of the inner-beam plate 11c. A boxshaped cover body 13 is mounted on an outer-surface of the inner-side plate 11a located on one side in the longitudinal direction, and a veneer plate Vp covers circumferences of the supporting frame 11, the top plate 12, and the cover body 13.

In the cover body 13, although not specifically disclosed, a control board controlling operations of the heating and cooking apparatus HC, to which an electric power is supplied from a battery, and a gas pipe to supply hydrogen to a gas nozzle inserted into one end of a below-mentioned burners are disposed. In addition, various parts, such as a gas cock and an electromagnetic open/close valve, which regulate a flow rate of hydrogen supplied to the gas nozzle and are interposed into the gas pipe, are disposed. An operation knob 14 is provided with a front-surface part of the veneer plate Vp covering the cover body 13. The gas cock is configured to be operated by interlocking with a rotational operation of the operation knob 14 to regulate the hydrogen supplied to the gas nozzle. It should be noted that, since conventional member can be used for the aforementioned parts necessary to combustion of each burner, description in detail containing ignition/extinction operation of each burner is omitted.

A first opening 12a that is positioned above the drop-receiving tray 2, is elongated in the longitudinal direction, and is rectangular is opened in the top plate 12 held by both ends in the longitudinal direction, and a second opening Vp1 that is larger by one size than the first opening 12a is opened in a front surface of the veneer plate Vp. A supporting frame 15 that is positioned on both sides in the width direction within the second opening Vp1 and stands upward is provided on the top plate 12, and a gridiron 16 on which food to be heated and cooked is put is supported by the supporting frame 15. A three-tiered reception part 15a in the vertical direction, which supports each of lateral-rod parts 16a of the gridiron 16, is provided on the supporting frame 15, allowing a height of the gridiron 16 to be adjusted to three levels. In addition, two first guide plate parts 12b, 12b extending diagonally downward are provided on both inner-edge parts along the longitudinal direction of the first opening 12a. Furthermore, a second guide plate part 17a and a third guide plate part 17b are provided on an outer-side of the first guide plate parts 12b, 12b, respectively. The first guide plate parts 12b, 12b the second guide plate part 17a, and the third guide plate part 17b are configured that grilled soups and oils that generate at the time of heating and cooking food to be heated and cooked to guide to the drop-receiving tray 2. Two burners 3, 3 that are positioned within a space between the two first guide plate parts 12b, 12b are aligned at an interval in the width direction.

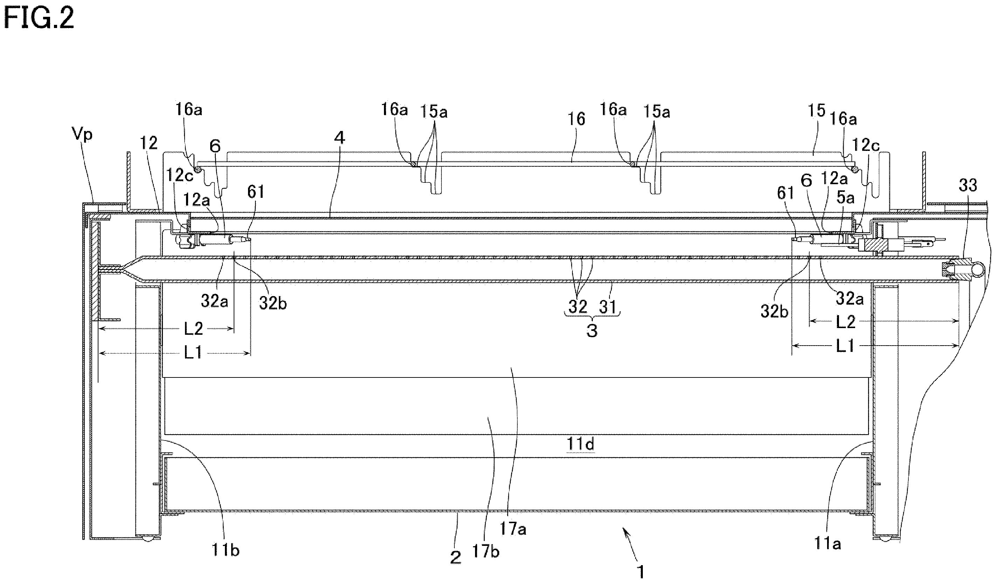

Each burner 3 is constituted by a tubular burner body 31 of which one end (a left-hand end in FIG. 2) in the longitudinal direction is closed and that is made of metal, and by multiple burner ports 32 opened in each burner body 31 at intervals along the longitudinal direction within a range facing the first opening 12a. In the embodiment, a contour of each burner body 31 is a circular-tube shape, and each burner port 32 is opened in an apex part of the burner body 31. A radial diameter of each burner port 32 may be set at 0.6mm or smaller. The closed end of each burner 3, which protrudes from the inner-side plate 11b on the one side (the left-had end in FIG. 2) in the longitudinal direction, is supported by an inner surface of the veneer plate Vp, and a gas nozzle 33 provided within the cover body 13 is fitted in an opened end of each burner 3, which protrudes from the inner-side plate 11a on the other side (a right-hand side in FIG. 2) in the longitudinal direction.

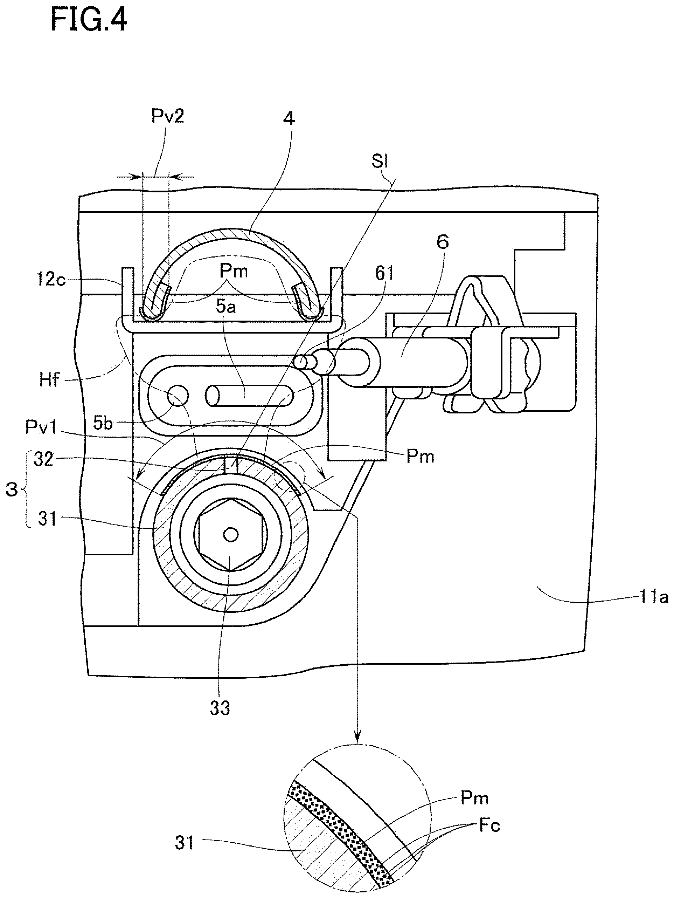

Infrared radiation members 4, 4 are disposed at an interval above the corresponding burner body 31, i.e., upward in a hydrogen ejection direction from the burner ports 32. Each infrared radiation member 4 is made from a metal plate that is curved downward into an arc shape, and a length of each infrared radiation member 4 is defined to cover all the burner ports 32 of the corresponding burner body 31. A pair of supporting plate parts 12c, 12c are mounted on both inner-edge parts along a width direction of the first opening 12a, and each end of each infrared radiation member 4 is supported by a corresponding supporting plate part 12c. An inner diameter of each infrared radiation member 4 is set larger than an outer diameter of the corresponding burner body 31, preventing the grilled soups and oils from dropping onto a surface of each burner body 31. A pair of rod-shaped electrodes 5a, 5b are provided in the vicinity of a burner port 32 (hereafter, the burner ports positioned at both ends in the longitudinal direction are defined as "burner ports 32a, 32a") located closest to the other end in the longitudinal direction (the right-hand end in FIG. 2) of each burner body 31. A high voltage is applied between the rod-shaped electrodes 5a, 5b from the control board, not-shown, by operation of the operation knob 14, and ignition is achieved through spark discharge generated by the application of the high voltage. When achieving ignition, hydrogen supplied to each burner 3 and ejecting from each burner port 32 is diffused and combusted, and hydrogen flame Hf is generated (referred to FIG. 4). Each infrared radiation member 4 is heated to become red-hot by the hydrogen flame Hf, and food to be heated and cooked, which is put on the gridiron 16, is heated and cooked (fired and cooked) by infrared.

Here, the hydrogen flame Hf generated at the time of complete combustion of hydrogen can be little recognized visually because there are no active species accompanying chemiluminescence in a visible light region. If each infrared radiation member 4 becomes red-hot, it will be recognized that the hydrogen flame Hf is properly formed, but it will take time by red-hot of each infrared radiation member 4. In the embodiment, as shown in FIG. 4, a flame-reaction agent Fc is applied to a surface of each of the burner-port opened portions and to surfaces of both end parts in the width direction of each infrared radiation member 4. Specifically, provided that each burner port 32 is defined as a starting point, a surface of each burner body 31, which is wider than an area with which the hydrogen flame Hf can come into contact, is defined as a burner-port opened portion Pv1, and both inner and outer surfaces in a predetermined area of both end parts in the width direction of each infrared radiation member 4 are defined as surfaces Pv2 of both end parts in the width direction of each infrared radiation member 4, the flame-reaction agent Fc is applied to the aforementioned surfaces. A conventional paint material Pm with a heat-resistant property is prepared in advance, the granular flame-reaction agent Fc, for example, is added to the paint material Pm in a predetermined weight percentage, and the paint material Pm to which the flame-reaction agent Fc is added is then applied to the aforementioned surfaces. If there are no sanitary problems regarding food to be cooked and chemiluminescence in the visible light region is produced, chemical compounds are not specifically limited and the chemical compounds such as sodium chloride (yellow), sodium carbonate (yellow), and potassium chloride (redpurple) can be used as the flame-reaction agent Fc.

Accordingly, presence of the hydrogen flame Hf generated by combustion of hydrogen can be quickly recognized visually from start of combustion, without waiting for each infrared radiation member 4 to become red-hot, by occurring a flame reaction between hydrogen flame Hf generated by combustion of hydrogen and the flame-reaction agent Fc (i.e., by generation of a colored flame). In addition, since hydrogen ejecting from each burner port 32 is not mixed with the flame-reaction agent Fc for visually recognizing the hydrogen flame Hf, there is no issue of reduced heat amount. Furthermore, since secondary air is easily supplied to each burner port 32 along the surface of each burner-port opened portion Pv1, the hydrogen flame Hf requiring secondary air diffuses more widely along the surface of each burner-port opened portion Pv1. As a result, an area in which the flame reaction occurs becomes broader, allowing for a more certain recognition of existence of the hydrogen flame Hf. Meanwhile, even in a case where the flame-reaction agent Fc is applied only to a surface on an inner side in the width direction of each infrared radiation member 4, since the colored flame generated by the flame reaction overflows outward in the width direction of each infrared radiation member 4, existence of the hydrogen flame Hf can be recognized.

On the other hand, even in the heating and cooking apparatus HC including the aforementioned burners 3 and infrared radiation members 4, which allows for quick recognition of existence of the hydrogen flame Hf from start of the combustion, it is necessary to rapidly stop supplying hydrogen to each burner 3 when the flame is extinguished for any reason. In the embodiment, conventional thermocouples 6 are respectively provided on the corresponding supporting plate part 12c, positioned at each of ends in the longitudinal direction of each burner 3. The control board (not shown) is configured to receive outputs from each thermocouple 6, and the heating and cooking apparatus HC is configured such that, when the outputs fall a preset threshold or lower, the electromagnetic opening/closing valve closes to stop supplying hydrogen to each burner 3. Here, in a case where each thermocouple 6 is disposed such that a temperature-measuring contact part 61, located at a tip end of each thermocouple 6, protrudes within the hydrogen flame Hf, a temperature of the temperature-measuring contact part 61 is too high, leading to a reduction in a yield stress of each thermocouple 6. On the other hand, since the hydrogen flame Hf generated when diffusing and combusting hydrogen at each burner 3 flickers easily due to an influence of secondary air, if the temperature-measuring contact part 61 is too far from the hydrogen flame Hf, it may fail to detect the hydrogen flame Hf at times. In the embodiment, as shown in FIGS. 2, 4, each thermocouple 6 is disposed such that the temperature-measuring contact part 61 of each thermocouple 6 is located on a plane on which a straight line Sl connecting a peripheral edge of each burner port 32 and one end in the width direction of the corresponding infrared radiation member 4 in the shortest way is projected in the longitudinal direction of each burner body 31. In addition, when viewed from a side of each infrared radiation member 4, the temperature-measuring contact part 61 of each thermocouple 6 is located at a portion where a distance L1 from one end in the longitudinal direction of each burner body 31 is equal to or longer than a distance L2 to a burner port 32 (the burner port is defined as a "burner port 32b") adjacent to the burner port 32a located closest to the one end in the longitudinal direction of each burner body 31. It should be noted that, as shown in FIG. 4, an arrangement where the temperature-measuring contact part 61 of each thermocouple 6 is located on the plane projected in the longitudinal direction of each burner body 31 includes not only an arrangement where the temperature-measuring contact part 61 is located so as to substantially come into contact with the projected plane, but also the one where the temperature-measuring contact part 61 is located so as to intersects the projected plane.

Accordingly, a problem that yield strength of each thermocouple 6 reduces due to an excessively high temperature of the temperature-measuring contact part 61 does not occur, and even when the hydrogen flame Hf flickers, each thermocouple 6 can always detect the hydrogen flame Hf. The hydrogen flame Hf at the burner port 32a, located closest to the one end in the longitudinal direction of each burner body 31, easily flickers specifically. However, as aforementioned, since the temperature-measuring contact part 61 is located at the portion where the distance L1 from the one end in the longitudinal direction of each burner body 31 is equal to or longer than the distance L2 to the burner port 32b, the hydrogen flame Hf can be detected more reliably.

The embodiment of the invention is explained referring to the figures in the above. On the other hand, various modifications may be possible as long as the various modifications remain within a scope of a technological concept of the invention. For example, in the embodiment, while the number of the burners 3 is two, the number is not limited to two. In addition, in the embodiment, while the contour of each burner body 31 has a circularpipe, if a cross-sectional shape of the surface of the burner-port opened portion Pv1 of each burner body 31 is convex in the direction of hydrogen ejection from each burner port 32, the cross-sectional shape of surfaces other than the burner-port opened portion Pv1 may, for example, be rectangular.

Further, in the embodiment, each infrared radiation member 4 has a downward curved and arced contour, if each infrared radiation member 4 can radiate infrared over a wide area to food to be cooked, the contour may not be limited to the downward curved and arced one. For example, the contour of each infrared radiation member 4 may be a flat-plate shape.

### Explanation of symbols

- HC: Heating and cooking apparatus
- 3: Burner
- 31: Burner body
- 32, 32a, 32b: Buner port
- 4: Infrared radiation member
- 6: Thermocouple
- 61: Temperature-measuring contact part
- Fc: Flame-reaction agent
- Sl: Straight line connecting a peripheral edge of each burner port and one end in a width direction of each infrared radiation member in the shortest way

## Claims

1. A heating and cooking apparatus that heats and cooks food to be heated and cooked by combusting a fuel gas, comprising:
burners each of which has a tubular and elongated burner body, and multiple burner ports that are opened at intervals in each burner body in a longitudinal direction;
infrared radiation members each of which is disposed opposite a corresponding burner body, each infrared radiation member being elongated in the longitudinal direction of each burner body and radiating infrared by being heated; and
thermocouples each of which detects a flame that is generated when the fuel gas is supplied to each burner, ejects from each burner port, and is combusted,
wherein:
each burner is configured to diffuse and combust hydrogen as the fuel gas, which ejects from each burner port, and each thermocouple is disposed such that a temperature-measuring contact part thereof is located on a plane where a straight line, connecting a peripheral edge of each burner port and one end in a width direction of the corresponding infrared radiation member in the shortest way, is projected in the longitudinal direction of each burner body.

2. The heating and cooking apparatus as claimed in claim 1, wherein, when viewed from a side of each infrared radiation member, the temperature-measuring contact part of each thermocouple is located at a portion where a distance from one end in the longitudinal direction of each burner body is equal to or longer than a distance to a burner port adjacent to a burner port located closest to the one end in the longitudinal direction of each burner body.
